# EUROPEAN PATENT APPLICATION

(11) **EP 1 728 623 A1**
(43) Date of publication of application: **06.12.2006**
(21) Application number: 05381027.1
(22) Date of filing: 03.06.2005
(51) Int. Cl.: B32B 15/14

(54) **Multilayer aluminium-fabric laminate**

(71) Applicant: Lloveras Calvo, Pedro, 08182 San Feliu de Codinas (ES)
(72) Inventor: Lloveras Calvo, Pedro, 08182 San Feliu de Codinas (ES)
(74) Representative: Esteban Perez-Serrano, Maria Isabel

(57) **Abstract**

Polylaminate aluminium piece composed of a layered structure that alternates aluminium sheets and fibre fabric sheets; the fibre fabric sheets are interposed between aluminium sheets such that the piece has improved structural characteristics and is easy to handle.

## Description

### OBJECT OF THE INVENTION

The present invention relates to pieces of polylaminate aluminium composed of a layered structure that alternates aluminium sheets and fibre fabric sheets.

The special configuration of the piece, which has sheets of fibres interposed between sheets of aluminium, provides improved structural characteristics and makes it easier to handle.

### BACKGROUND OF THE INVENTION

One of the characteristics of aluminium pieces is their high strength, which can cause problems when cutting pieces thicker than 4mm as the various tools used may overheat and break.

Another characteristic of aluminium pieces with thickness greater than 4mm is their poor resistance to bending in winding operations.

When winding these pieces tensions appear that eventually break it, so that it is only possible to laminate aluminium, not to wind it.

Aluminium oxidises easily in contact with oxygen in air, thereby deteriorating.

For this reason, it is common to give different finishes to aluminium pieces to prevent their early wear.

One of the treatments that can be given to aluminium pieces is anodisation, i.e. obtaining an artificial oxide film by electrochemical processes with a thickness greater than that which would form naturally.

Anodised aluminium sheets of this type are widely used in construction, as they are more protected from atmospheric agents as rain, sun and humidity.

Anodisation processes are increasingly expensive according to the thickness of the piece.

With the pieces of the invention formed by a plurality of aluminium sheets it is possible to obtain a sheet with a specific thickness obtained from several aluminium sheets of lesser thickness, thereby simplifying its handling.

The constitution of the piece where the aluminium material is joined to a fibre fabric material adds unites the characteristics of aluminium and those of fibre fabric.

### DESCRIPTION OF THE INVENTION

The present invention relates to a polylaminate aluminium piece composed of a layered structure in which aluminium sheets alternate with fibre fabric sheets joined to each other by an adhesive.

In the piece of the invention, the outer surfaces are aluminium sheets. The aluminium of said sheets can be treated, with various finishes.

Aluminium plates with a thickness above 4 mm have various handling problems, such as when winding or cutting them.

For this reason, each of the aluminium pieces of the invention have a thickness under 4mm.

The aluminium pieces of the invention interpose fibre fabric sheets with aluminium sheets, which confer a greater flexibility to the aluminium sheet.

Pieces with the same overall thickness composed of a single aluminium sheet are subjected to greater stresses when bending, and at a certain thickness it is not possible to bend the aluminium sheet.

On another hand, when pieces with a thickness greater than 4mm are machined problems arise when cutting the piece, as the various cutting tools overheat and may break.

This problem is avoided by the piece of the invention, as it consists of various aluminium sheets with a thickness under 4 mm, and fibre fabric sheets, thereby simplifying the cut by breaking in the layered structure the homogeneity of the material in the direction transverse to the cut.

The fibre fabric layers are preferably made of fibreglass or carbon fabric or of aramid fibre.

The characteristics of its component materials make the piece of the invention suitable for use in surgical rooms, transformers and nuclear stations, as it prevents radiation leaks by the fibre fabric, such as fibreglass, with electrical insulation characteristics.

The aluminium pieces of the invention can also be used in clean rooms which must be kept free of contamination, keeping contaminant particles out of the room and minimising their generation inside them.

Materials with a high impact strength, such as aramid fibres, prevent the proliferation of undesired particles as if the material does not have a high strength cracks or scrapes appear which, as they are out of reach of the cleaning operations, allow micro-organisms to appear.

### DESCRIPTION OF THE DRAWINGS

The present descriptive memory is completed by a set of drawings that illustrate the preferred embodiment and do not limit the invention in any way.

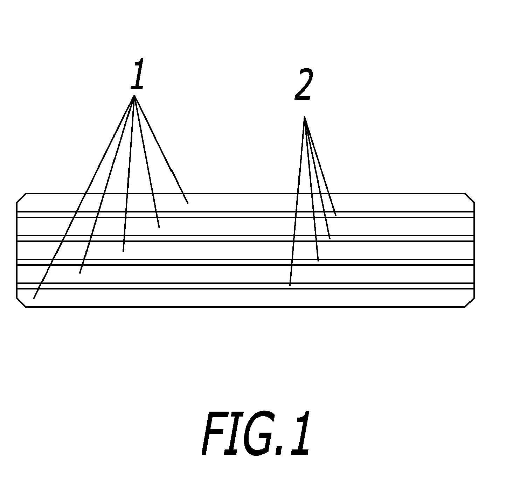

Figure 1 shows a cross section of the piece of the invention.

### PREFERRED EMBODIMENT OF THE INVENTION

In a preferred embodiment of the invention the piece is formed by a plurality of aluminium sheets and fibreglass fabric sheets.

The fibreglass fabric sheets (2) are interposed between the aluminium sheets (1).

The outer surface of the end aluminium sheets have a protective oxide layer developed after an anodisation process.

In a second preferred embodiment of the invention the fibre fabric is a carbon fibre fabric.

The carbon fibre fabric interposed between the aluminium layers provides the piece of the invention with good heat insulation and heat break properties.

In a third preferred embodiment of the invention the insulating material is an aramid fibre fabric.

The aramid fibre fabric is used to obtain a high resiliency, especially when a high resistance to impacts is required.

The outer faces of the pieces can have a finish other than anodising, such as a mirror lacquer or striated finish, or they may be coated with a humidity-proof wooden veneer, or a PVC (polyvinyl chloride) sheet.

The essence of this invention is not affected by variations in the materials, shape, size and arrangement of the component elements, described in a nonlimiting manner that should allow its reproduction by an expert.

## Claims

1. Polylaminate aluminium piece **characterised in that** it is composed of a stratified structure in which aluminium sheets and fibre fabric sheets are alternated joined to each other by an adhesive.

2. Polylaminate aluminium piece according to claim 1 **characterised in that** the thickness of the aluminium sheets is less than 4mm.

3. Polylaminate aluminium piece according to claim 1 **characterised in that** the fibre fabric is fibreglass.

4. Polylaminate aluminium piece according to claim 1 **characterised in that** the fibre fabric is carbon fibre fabric.

5. Polylaminate aluminium piece according to claim 1 **characterised in that** the fibre fabric is aramid fibre.

6. Polylaminate aluminium piece according to claim 1 **characterised in that** the end aluminium sheets have an anodised finish.

7. Polylaminate aluminium piece according to claim 1 **characterised in that** the end aluminium sheets have a lacquered finish.

8. Polylaminate aluminium piece according to claim 1 **characterised in that** the end aluminium sheets have a mirrored finish.

9. Polylaminate aluminium piece according to claim 1 **characterised in that** the end aluminium sheets have a striated finish.

10. Polylaminate aluminium piece according to claim 1 **characterised in that** the end sheets are joined to a wooden veneer with an anti- humidity treatment.

11. Polylaminate aluminium piece according to claim 1 **characterised in that** the end aluminium sheets have a PVC layer.
